# EUROPÄISCHE PATENTANMELDUNG

(11) **EP 2 034 304 A1**
(43) Veröffentlichungstag der Anmeldung: **11.03.2009**
(21) Anmeldenummer: 08015888.4
(22) Anmeldetag: 10.09.2008
(51) Int. Cl.: G01N 29/275, G01N 29/28

(54) **Prüfstation für Druckgasflaschen und damit gebildetes Prüfsystem**

(30) Priorität: 10.09.2007 DE 202007012620 U
(71) Anmelder: Kessels GmbH, 41066 Mönchengladbach (DE)
(72) Erfinder: Schmidt, Dirk, 41366 Schwalmtal (DE)
(74) Vertreter: Müller, Karl-Ernst

(57) **Zusammenfassung**

Eine Prüfstation für Druckgasflaschen mit einer Aufnahmeeinrichtung zum Fixieren und zum Drehen der Druckgasflaschen während des Prüfvorganges sowie mit einem über die Länge der Druckgasflaschen hin und her bewegbaren Ultraschall-Prüfkopf, der über einen in dem Zwischenraum zwischen Druckgasflasche und Prüfkopf erzeugten Wasserfilm an die Oberfläche der Druckgasflasche ankoppelbar ist, ist dadurch gekennzeichnet, dass die Aufnahmeeinrichtung aus einem Gestell (10) mit einer gegen die Vertikale geneigten Stützeinrichtung (11) besteht, welche wenigstens zwei Stützrollen (12) zur Halterung der aufgrund der Neigung mit ihrem Eigengewicht gegen die Stützrollen (12) anliegenden und sich drehenden Druckgasflasche (28) aufweist, und dass die von dem Prüfkopf (15) durchfahrene Bahn auf der von den Stützrollen (12) beaufschlagten Seite der Druckgasflasche (28) angeordnet und am Fuß der Stützeinrichtung (11) ein das an der Druckgasflasche (28) herabfließende Wasser auffangender Wasserauffangkasten (14) angeordnet ist.

## Beschreibung

Die Erfindung betrifft eine Prüfstation für Druckgasflaschen mit einer Aufnahmeeinrichtung zum Fixieren und zum Drehen der Druckgasflaschen während des Prüfvorganges sowie mit einem über die Länge der Druckgasflaschen hin und her bewegbaren Ultraschall-Prüfkopf, der über einen in dem Zwischenraum zwischen Druckgasflasche und Prüfkopf erzeugten Wasserfilm an die Oberfläche der Druckgasflasche ankoppelbar ist.

Eine Prüfstation mit den vorgenannten Merkmalen ist aus der Firmendruckschrift "Druckgasflaschenprüfung mit Ultraschall" der Firmen Agfa NDT. GmbH, D-50354 Hürth, und Swiss TS Technical Services AG, CH-8304 Wallisellen, bekannt. Danach hat sich die Prüfung von Druckgasflaschen unter Einsatz von Ultraschall neben der Prüfungsmethode der Wasserdruckprüfung etabliert. Bei der Ultraschallprüfung fährt ein Prüfkopf unter Wasserankopplung über die Oberfläche der während des Prüfvorganges in Drehung gehaltenen Druckgasflasche. Hierzu wird eine Druckgasflasche liegend in ein mit einem entsprechend horizontal ausgebildeten Rollenbett versehenes Gestell eingebracht, wonach der Prüfkopf den oberen, freiliegenden Bereich der Druckgasflasche überfährt. Nach Beendigung der Messfahrten wird die Druckgasflasche aus dem Gestell entnommen.

Mit der bekannten Prüfstation ist der Nachteil eines hohen Handhabungsaufwandes verbunden, weil die meist stehend angelieferten schweren Druckgasflaschen entweder von Hand oder mit Hilfe eines Manipulators in eine waagerechte Position gekippt und in das Gestell eingelegt werden müssen; der gleiche Vorgang ist in umgekehrter Reihenfolge nach Beendigung der Ultraschallprüfung auszuführen. Diese Handhabungsvorgänge sind zeitaufwändig, wodurch der Zyklus für die Durchführung der Druckgasflaschenprüfung entsprechend lang ist. Ein weiterer Nachteil besteht darin, dass bei einer unrunden Außenwandung der Druckgasflaschen im Rollenbett ein Anschlagen der Druckgasflasche an dem längs eines festen Weges über die Druckgasflasche geführten Prüfkopf nicht völlig auszuschließen ist.

Der Erfindung liegt daher die Aufgabe zugrunde, eine Prüfstation mit den eingangs genannten Merkmalen so auszugestalten, dass der Handhabungsaufwand für die Druckgasflaschen vor und nach der Ultraschallprüfung verringert und der Prüfvorgang verbessert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu zunächst vor, dass die Aufnahmeeinrichtung aus einem Gestell mit einer gegen die Vertikale geneigten Stützeinrichtung besteht, welche wenigstens zwei Stützrollen zur Halterung der aufgrund der Neigung mit ihrem Eigengewicht gegen die Stützrollen anliegenden und sich drehenden Druckgasflasche aufweist, und dass die von dem Prüfkopf durchfahrene Bahn auf der von den Stützrollen beaufschlagten Seite der Druckgasflasche angeordnet und am Fuß der Stützeinrichtung ein das an der Druckgasflasche herabfließende Wasser auffangender Wasserauffangkasten angeordnet ist.

Mit der Erfindung ist der Vorteil verbunden, dass die in der Regel stehend angelieferten Druckgasflaschen unter Beibehaltung ihrer im wesentlichen vertikalen Ausrichtung in die Prüfstation eingestellt werden können; dazu brauchen die Druckgasflaschen nur leicht aus ihrer vertikalen Position in Anlage gegen die geneigte Stützeinrichtung gebracht werden, in der die Druckgasflaschen dann aufgrund ihres Eigengewichtes gehalten sind. Bei der eingerichteten Drehung der Druckgasflasche rollt sich die Druckgasflasche an den weiterhin vorgesehenen Stützrollen ab. Mit der Anordnung des Messkopfes auf der durch die einzelnen Rollen fixierten Seite der Druckgasflasche ist der Vorteil verbunden, dass die Flasche auch bei unrunden Drehbewegungen nicht gegen den Messkopf schlagen kann. Soweit bei der Prüffahrt der Prüfkopf über einen gleichmäßigen Wasserfilm an den Außenumfang der Druckgasflasche anzukoppeln ist, muss ein entsprechend ausgelegter Wasserdruck eingestellt werden, damit aufgrund der mehr oder weniger vertikalen Ausrichtung des Messkopfes das Wasser auch in die oberhalb des in den Messkopf eingerichteten Wasseraustritts gelegenen Bereiche des Prüfkopfes gelangt, bevor das Wasser der Schwerkraft folgend längs der Flasche in den am Fuße der Prüfstation ausgebildeten Wasserauffangkasten abfließt.

Nach einem Ausführungsbeispiel der Erfindung ist vorgesehen, dass der Neigungswinkel der Stützeinrichtung zwischen 70° und 88°, vorzugsweise 85° beträgt.

Hinsichtlich der Ausbildung der Stützeinrichtung ist nach einem Ausführungsbeispiel der Erfindung vorgesehen, dass an der Stützeinrichtung beidseitig ihrer zur dagegen anliegenden Druckgasflasche gerichteten Mittenebene wenigstens je eine Stützrolle angeordnet ist.

Aufgrund der Längserstreckung der Druckgasflaschen ist nach einem Ausführungsbeispiel der Erfindung vorgesehen, dass über die Höhe der Stützeinrichtung zwei beabstandete Stützrollen übereinander angeordnet sind.

Soweit für die Wasserankopplung des Prüfkopfes eine entsprechende Wasserversorgung sicherzustellen ist, ist nach einem Ausführungsbeispiel der Erfindung vorgesehen, dass der Prüfkopf unter Zwischenschaltung einer Pumpe an den Wasserauffangkasten angeschlossen ist, wobei vorgesehen sein kann, dass in den Pumpweg zwischen Pumpe und Prüfkopf eine Vorrichtung zur Beruhigung und/oder Reinigung des umlaufenden Wassers eingeschaltet ist, damit die Anforderungen an das für den Prüfvorgang eingesetzte Wasser als Ankoppelmedium erfüllt werden können.

In an sich aus dem Stand der Technik bekannter Weise kann vorgesehen sein, dass in dem rechteckigen Prüfkopf fünf Ultraschallsensoren in einem Raster mit einem zentralen Sensor und je einem Sensor in den Eckbereichen des Prüfkopfesangeordnet sind, wobei vorgesehen sein kann, dass die in dem Prüfkopf angeordnete Wasserdüse zur Erzeugung des Ankopplungsfilms dem zentralen Sensor zugeordnet ist.

Soweit die Drehbewegung der Druckgasflasche grundsätzlich in der Prüfstation selbst oder aber außerhalb davon erzeugt werden kann, ist zur Erzeugung der Drehung in der Prüfstation nach einem Ausführungsbeispiel der Erfindung vorgesehen, dass an der Stützeinrichtung eine angetriebene Antriebsrolle zur Erzeugung der Drehbewegung der Druckgasflasche angeordnet ist.

Zur Abstützung der Druckgasflasche in der Stützeinrichtung kann vorgesehen sein, dass an der Stützeinrichtung auf der einen Seite ihrer zur dagegen anliegenden Druckgasflasche gerichteten Mittenebene wenigstens eine Stützrolle und auf der anderen Seite die Antriebsrolle angeordnet ist. Alternativ ist es auch möglich, beidseitig der Mittenebene der Stützeinrichtung jeweils Stützrollen anzuordnen und eine zusätzliche Antriebsrolle vorzusehen. Die zusätzliche Antriebsrolle kann auch an die Stelle einer der beidseitig der Mittenebene der Stützeinrichtung angeordneten Stützrollen treten. Hierbei kann vorgesehen sein, dass die Antriebsrolle eine größere Längserstreckung als jede Stützrolle aufweist.

Zur Verbesserung des Antriebes der Druckgasflasche im Hinblick auf deren durchzuführende Drehbewegung kann nach einem Ausführungsbeispiel der Erfindung vorgesehen sein, dass ein zusätzliches angetriebenes Gegenlager an der Stützeinrichtung angeordnet ist.

Die Beschickung der Prüfstation mit den zur Prüfung anstehenden Druckgasflaschen ist nach einem Ausführungsbeispiel der Erfindung dadurch gegeben, dass die Druckgasflaschen von Hand oder mittels eines Manipulators in die vertikal ausgerichtete Prüfstation eingestellt werden. Gegenüber dem Stand der Technik ist der Prüfaufwand bereits reduziert, weil die Druckgasflaschen nicht mehr aus der vertikalen Transportstellung in die horizontale Prüfstellung gedreht beziehungsweise zurückgestellt werden müssen. Für eine derartige Anwendung ist nach einem Ausführungsbeispiel der Erfindung vorgesehen, dass bodenseitig an der Stützeinrichtung ein Drehteller zur Abstützung der darauf während des Prüfvorganges gestellten Druckgasflasche angebracht ist.

Besonders vorteilhaft lässt sich die erfindungsgemäße Prüfstation in einem Prüfsystem einsetzen, welches aus der erfindungsgemäßen Prüfstation und aus einer Druckgasflaschentransportanlage besteht, bei welcher die Druckgasflaschen in einer von einem Transportmittel herabhängenden Anordnung transportiert werden. In einem solchen Prüfsystem ist die Prüfstation der Transportanlage so zugeordnet, dass die hängend angeordneten Druckgasflaschen in geeigneter Weise in die Prüfstation hineingekippt beziehungsweise wieder daraus herausgekippt werden, ohne dass die Druckgasflasche von der Transportanlage abgenommen oder in sonstiger Weise manipuliert werden müsste.

Hierzu ist nach einem ersten Ausführungsbeispiel der Erfindung vorgesehen, dass die Stützeinrichtung über im Takt des Druckgasflaschenwechsels ein- und ausfahrbare Zylinder an dem Gestell gehalten ist derart, dass die Stützeinrichtung bei ausgefahrenen Zylindern die von der Transportanlage herabhängenden Druckgasflaschen gegen die an ihr angeordneten Stützrollen kippt.

In einer alternativen Ausführungsform kann vorgesehen sein, dass das Gestell einschließlich Stützeinrichtung auf an dem Untergestell der Prüfstation ausgebildeten Schienen im Takt des Druckgasflaschenwechsels hin und her bewegbar ist derart, dass die Stützeinrichtung bei an die Transportanlage herangefahrenem Gestell die von der Transportanlage herabhängende Druckgasflasche gegen die von ihr getragenen Stützrollen kippt.

Damit eine Drehbewegung der Druckgasflasche gegenüber der Transportanlage möglich ist, ist gemäß einem Ausführungsbeispiel der Erfindung zwischen Transportmittel und Druckgasflasche ein Drehlager beispielsweise in Form einer Kugelgelenkverbindung angeordnet.

Soweit die Alternative einer externen Erzeugung der Drehbewegung der Druckgasflasche angesprochen wurde, kann nach einem Ausführungsbeispiel der Erfindung vorgesehen sein, dass zur Erzeugung einer Drehbewegung der Druckgasflasche in der Stützeinrichtung der Prüfstation am Kopf der Druckgasflasche ein über die Transportanlage antreibbarer Drehantrieb angreift.

Zur Einrichtung des Taktes des Druckgasflaschenwechsels ist nach einem Ausführungsbeispiel der Erfindung vorgesehen, dass an dem Gestell der Prüfstation ein in den Transportweg der Druckgasflaschen reichender Steuerschalter vorgesehen ist, der die Bewegung der vorbeigehenden Druckgasflaschen taktweise in der der Prüfstation zugeordneten Stellung zur Durchführung des Prüfvorganges anhält. Der Steuerschalter kann nach Ausführungsbeispielen der Erfindung beispielsweise als Endschalter oder auch als Sensor ausgebildet sein.

Die Prüfstation kann in einfacher Weise dadurch mobil eingerichtet werden, dass das Untergestell beispielsweise mittels geeigneter Rollen verfahrbar eingerichtet oder aber so ausgelegt ist, dass das Untergestell von den Gabeln eines Gabelstaplers unterfahren und so umgesetzt werden kann.

In der Zeichnung ist ein Ausführungsbeispiel der Erfindung wiedergegeben, welches nachstehend beschrieben ist. Es zeigen:
- Fig. 1: eine Prüfstation in einer isometrischen Ansicht,
- Fig. 2: die Prüfstation gemäß Figur 1 in einer Seitenansicht,
- Fig. 3: ein Prüfsystem mit einer Druckgasflaschentransportanlage und mit einer daran ausgerichteten Prüfstation gemäß Figuren 1 und 2 in einer isometrischen Darstellung,
- Fig. 4: das Prüfsystem gemäß Figur 3 in einer Seitenansicht.

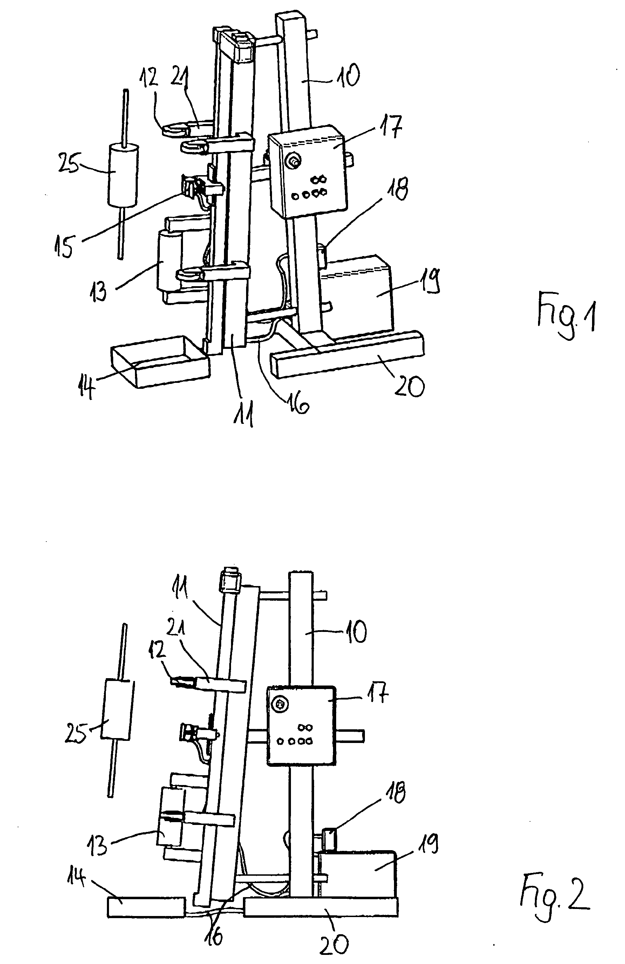

Die aus der Zeichnung ersichtliche Prüfstation hat ein auf einem Untergestell 20 mit einer vertikalen Ausrichtung aufgestelltes Gestell 10, an welchem eine Stützeinrichtung 11 gehaltert ist. Wie sich insbesondere aus Figur 2 ergibt, ist die Stützeinrichtung 11 gegen die Vertikale geneigt und zwar mit einem Winkel von etwa 85° gegen die Horizontale. Bei dem dargestellten Ausführungsbeispiel sind an der Stützeinrichtung an beidseitig davon stehenden Armen 21 im oberen Bereich jeweils eine Stützrolle 12 angebracht. Beabstandet dazu sind im unteren Bereich der Stützeinrichtung 11 eine Stützrolle 12 und gegenüberliegend eine angetriebene Antriebsrolle 13 angeordnet, die eine größere Längserstreckung als jede Stützrolle 12 aufweist. Aufgrund der geneigten Anordnung der Stützeinrichtung 11 mit Stützrollen 12 und Antriebsrolle 13 liegt eine in Anlage gegen die Stützeinrichtung gekippte, nicht dargestellte Druckgasflasche gegen die Rollen 12, 13 aufgrund ihres Eigengewichtes an, wird durch die angetriebene Antriebsrolle 13 ihrerseits in Drehung versetzt und rollt sich dabei an den sie stützenden Stützrollen 12 ab. Es kann vorgesehen sein, dass zusätzlich an der Stützeinrichtung 11 noch ein angetriebenes Gegenlager 25 vorgesehen ist, wie dies als Option in den Figuren 1 bis 4 dargestellt ist. Das Gegenlager wäre zentrisch in dem Prüfsystem angeordnet, so dass die Flasche zusätzlich zu der Antriebsrolle 13 auch über das Gegenlager 25 in Drehung versetzt werden kann. Damit kann gegebenenfalls eine bessere Führung der Druckgasflasche in der Prüfstation erreicht werden.

Wie nicht weiter dargestellt, kann in einer alternativen Ausführungsform vorgesehen sein, dass auf der einen Seite der Stützeinrichtung 11 zwei vertikal übereinander gesetzte Stützrollen 12 angeordnet sind, während auf der gegenüberliegenden Seite der Stützeinrichtung 11 eine Antriebsrolle 13 angeordnet ist, so dass die Druckgasflasche bei Anlage an die Stützeinrichtung 11 in einer 3-Punkt-Anlage sich befindet.

Längs der Stützeinrichtung 11 ist ein Prüfkopf 15 hin und her bewegbar, der insoweit die Oberfläche der in den Rollen 12, 13 stehenden Druckgasflasche überfährt. Derartige Prüfköpfe haben je nach Flaschengröße unterschiedliche Abmessungen von beispielsweise 110mm x 110mm bzw. 90mm x 90mm bzw. 80mm x 80mm je nach dem Durchmesser der zu prüfenden Druckgasflasche. Soweit Wasser für die Ankopplung des Prüfkopfes 15 an der Oberfläche der Druckgasflasche benötigt wird, befindet sich am unteren Ende der Stützeinrichtung 11 ein Wasserauffangkasten 14, von dem eine Wasserleitung 16 unter Zwischenschaltung einer Pumpe 18 bis zu dem Prüfkopf 15 geführt ist, so dass das Wasser in Kreislauf geführt werden kann.

An dem Gestell 10 befindet sich ein Steuerkasten 17, für die Steuerung der hin und her gehenden Bewegung des Prüfkopfes, und gegebenenfalls für die Drehung der Antriebsrolle 13 beziehungsweise des Gegenlagers 25. Weiterhin ist ein Wasserberuhigungsbehälter 19 vorgesehen, über welchen das von der Pumpe 18 vom Wasserauffangkasten 14 zum Prüfkopf 15 gepumpte Wasser geführt ist, um ein ruhiges, blasenfreies Wasser als Ankoppelmedium für den Prüfkopf 15 zur Verfügung zu haben. Es kann vorgesehen sein, dass in diesem Wasserberuhigungsbehälter auch eine Vorrichtung zur Reinigung des Wassers angeordnet ist. Der Wasserdruck ist so einzustellen, dass das mittig im Prüfkopf austretende Wasser auch zu den oberhalb des Wasseraustritts angeordneten Ultraschallsensoren gelangt. Im einzelnen ist der Wasserdruck auch abhängig von der üblicherweise mittels entsprechend vorgesehener Druckfedern erzeugten Federkraft, mit welcher der erforderliche Anpressdruck des Prüfkopfes 15 auf die Flasche erzeugt wird. Mit einem höheren Anpressdruck steigt auch der Wasserdruck. Erfahrungsgemäß ergibt sich bei einer erfindungsgemäßen Prüfstation ein Wasserdurchfluss von circa 60 1/min, wobei dieser Wasserdurchfluss über ein Drosselventil im einzelnen zu regeln ist.

Bei dem vorstehend beschriebenen Aufbau ist die Prüfstation grundsätzlich in zwei unterschiedlichen Weisen zu betreiben:

Zunächst ist es möglich, eine nicht dargestellte Druckgasflasche jeweils in die Stützeinrichtung 11 einzustellen, und zwar entweder von Hand oder aber mittels eines geeigneten Manipulators. Soll die Stützeinrichtung so eingesetzt werden, ist im Fußbereich der Stützeinrichtung 11 ein nicht weiter dargestellter Drehteller angebracht, auf dem die Druckgasflasche während des Prüfvorganges steht beziehungsweise in der durch die Antriebsrolle 13 hervorgerufenen Drehbewegung gehalten ist.

In besonders vorteilhafter Weise aber ist die Prüfstation in einer Zusammenschaltung mit einer Transportanlage als Prüfsystem einsetzbar, wobei die Druckgasflaschen in einer von einem vorzugsweise umlaufenden Transportmittel herabhängenden Anordnung transportiert werden. Im Rahmen eines solchen Prüfsystems kann die Prüfstation so an die Transportanlage mit den davon herabhängenden Druckgasflaschen gestellt werden, dass die Druckgasflaschen in geeigneter Weise lediglich aus ihrer vertikalen Ausrichtung ausgelenkt und dadurch automatisch und ohne einen zusätzlichen Handhabungsaufwand in die Stützeinrichtung 11 hineingekippt beziehungsweise nach Beendigung des Prüfvorganges daraus herausgekippt werden. Diese Kippbewegung ist dadurch zu bewerkstelligen, dass die geneigte Stützeinrichtung 11 gegen jeweils eine herabhängende Druckgasflasche vorgeschoben wird, so dass die Stützeinrichtung aufgrund ihrer geneigten Stellung das untere Ende der Druckgasflaschen aus der Vertikalen auslenkt und dadurch die Druckgasflasche in die Stützeinrichtung 11 hineinkippt. Nach Beendigung des Prüfvorganges wird die Stützeinrichtung 11 wieder zurückgezogen, so dass die Druckgasflasche ihre hängende Ausrichtung wieder einnimmt. Diese taktweise auszuführende Bewegung der Stützeinrichtung kann nach Ausführungsbeispielen der Erfindung dadurch eingerichtet sein, dass die Stützeinrichtung über ein- und ausfahrbare Zylinder an dem Gestell gehaltert ist beziehungsweise dass das Gestell 10 mit Stützeinrichtung 11 an im Untergestell 20 angeordneten Schienen hin und her bewegbar ist.

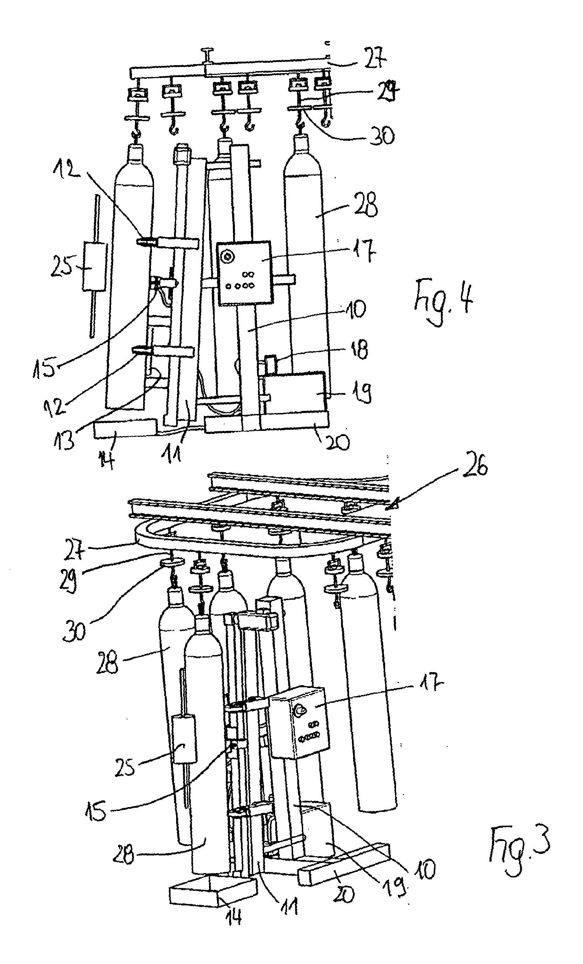

Ein Ausführungsbeispiel eines derartigen Prüfsystems mit einer auf eine Transportanlage ausgerichteten Prüfstation ist beispielhaft in den Figuren 3 und 4 dargestellt. Danach besteht die Transportanlage 26 aus einem vorzugsweise umlaufend eingerichteten beziehungsweise geführten Transportmittel 27, an welchem in Abständen zueinander Druckgasflaschen 28 aufgehängt sind. Dabei ist in die Aufhängung 29 der Druckgasflaschen 28 an dem Transportmittel 27 jeweils ein Drehlager 30 beispielsweise in Form einer Kugelgelenksverbindung eingeschaltet, damit sich die jeweils von der Prüfstation aufgenommene Druckgasflasche 28 in der Prüfstation drehen kann. Aus den Figuren 3 und 4 ist erkennbar, dass es keiner besonderen zusätzlichen Handhabung der Druckgasflaschen 28 bedarf, um die Druckgasflaschen 28 in der Prüfstation einer dementsprechenden Ultraschallprüfung zuzuführen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Prüfstation für Druckgasflaschen mit einer Aufnahmeeinrichtung zum Fixieren und zum Drehen der Druckgasflaschen während des Prüfvorganges sowie mit einem über die Länge der Druckgasflaschen hin und her bewegbaren Ultraschall-Prüfkopf, der über einen in dem Zwischenraum zwischen Druckgasflasche und Prüfkopf erzeugten Wasserfilm an die Oberfläche der Druckgasflasche ankoppelbar ist, **dadurch gekennzeichnet, dass** die Aufnahmeeinrichtung aus einem Gestell (10) mit einer gegen die Vertikale geneigten Stützeinrichtung (11) besteht, welche wenigstens zwei Stützrollen (12) zur Halterung der aufgrund der Neigung mit ihrem Eigengewicht gegen die Stützrollen (12) anliegenden und sich drehenden Druckgasflasche (28) aufweist, und dass die von dem Prüfkopf (15) durchfahrene Bahn auf der von den Stützrollen (12) beaufschlagten Seite der Druckgasflasche (28) angeordnet und am Fuß der Stützeinrichtung (11) ein das an der Druckgasflasche (28) herabfließende Wasser auffangender Wasserauffangkasten (14) angeordnet ist.

2. Prüfstation nach Anspruch 1, **dadurch gekennzeichnet, dass** der Neigungswinkel der Stützeinrichtung (11) zwischen 70° und 88° beträgt.

3. Prüfstation nach Anspruch 2, **dadurch gekennzeichnet, dass** der Neigungswinkel 85° beträgt.

4. Prüfstation nach einem der Ansprüche 1 bis 3, **dadurch gekennzeichnet, dass** an der Stützeinrichtung (11) beidseitig ihrer zur dagegen anliegenden Druckgasflasche gerichteten Mittenebene wenigstens je eine Stützrolle (12) angeordnet ist.

5. Prüfstation nach einem der Ansprüche 1 bis 4, **dadurch gekennzeichnet, dass** in der Höhe der Stützeinrichtung (11) zwei beabstandete Stützrollen (12) übereinander angeordnet sind.

6. Prüfstation nach einem der Ansprüche 1 bis 5, **dadurch gekennzeichnet, dass** der Prüfkopf (15) unter Zwischenschaltung einer Pumpe (18) an den Wasserauffangkasten (14) angeschlossen ist.

7. Prüfstation nach Anspruch 6, **dadurch gekennzeichnet, dass** in den Pumpweg zwischen Pumpe (18)und Prüfkopf (15) eine Vorrichtung (19) zur Beruhigung und/oder Reinigung des umlaufenden Wassers eingeschaltet ist.

8. Prüfstation nach einem der Ansprüche 1 bis 7, **dadurch gekennzeichnet, dass** in dem rechteckigen Prüfkopf (15) fünf Ultraschallsensoren in einem Raster mit einem zentralen Sensor und je einem Sensor in den Eckbereichen des Prüfkopfes angeordnet sind.

9. Prüfstation nach Anspruch 8, **dadurch gekennzeichnet, dass** die in dem Prüfkopf (15) angeordnete Wasserdüse zur Erzeugung des Ankopplungsfilms dem zentralen Sensor zugeordnet ist.

10. Prüfstation nach einem der Ansprüche 1 bis 9, **dadurch gekennzeichnet, dass** an der Stützeinrichtung (12) eine angetriebene Antriebsrolle (13) zur Erzeugung der Drehbewegung der Druckgasflasche angeordnet ist.

11. Prüfstation nach Anspruch 10, **dadurch gekennzeichnet, dass** an der Stützeinrichtung (11) auf der einen Seite ihrer zur dagegen anliegenden Druckgasflasche gerichteten Mittenebene wenigstens eine Stützrolle (12) und auf der anderen Seite die Antriebsrolle (13) angeordnet ist.

12. Prüfstation nach Anspruch 10 oder 11, **dadurch gekennzeichnet, dass** die Antriebsrolle (13) eine größere Längserstreckung als jede Stützrolle (12) aufweist.

13. Prüfstation nach einem der Ansprüche 10 bis 12, **dadurch gekennzeichnet, dass** ein zusätzliches angetriebenes Gegenlager (25) an der Stützeinrichtung (11) angeordnet ist.

14. Prüfstation nach einem der Ansprüche 1 bis 13, **dadurch gekennzeichnet, dass** bodenseitig an der Stützeinrichtung (11) ein Drehteller zur Abstützung der darauf während des Prüfvorganges gestellten Druckgasflasche angebracht ist.

15. Prüfsystem bestehend aus einer Prüfstation gemäß einem der Ansprüche 1 bis 13 und aus einer Druckgasflaschentransportanlage (26), bei welcher die Druckgasflaschen (28) in einer von einem bewegten Transportmittel (27) herabhängenden Anordnung transportiert werden.

16. Prüfsystem nach Anspruch 15, **dadurch gekennzeichnet, dass** die Stützeinrichtung (11) über im Takt des Druckgasflaschenwechsels ein- und ausfahrbare Zylinder an dem Gestell (10) gehalten ist derart, dass die Stützeinrichtung (11) bei ausgefahrenen Zylindern die von der Transportanlage (26) herabhängenden Druckgasflaschen (28) gegen die an ihr angeordneten Stützrollen (12) kippt.

17. Prüfsystem nach Anspruch 15, **dadurch gekennzeichnet, dass** das Gestell (10) einschließlich Stützeinrichtung (11) auf an dem Untergestell (20) der Prüfstation ausgebildeten Schienen im Takt des Druckgasflaschenwechsels hin und her bewegbar ist derart, dass die Stützeinrichtung (11) bei an die Transportanlage (26) herangefahrenem Gestell (10) die von der Transportanlage (26) herabhängende Druckgasflasche (28) gegen die von ihr getragenen Stützrollen (12) kippt.

18. Prüfsystem nach einem der Ansprüche 15 bis 17, **dadurch gekennzeichnet, dass** zwischen dem Transportmittel (27) und der Druckgasflasche (28) ein Drehlager zur Ermöglichung der Drehung der Druckgasflasche (28) gegenüber dem Transportmittel (27) angeordnet ist.

19. Prüfsystem nach einem der Ansprüche 15 bis 18 mit einer nach einem der Ansprüche 1 bis 10 ausgebildeten Prüfstation, **dadurch gekennzeichnet, dass** zur Erzeugung einer Drehbewegung der Druckgasflasche (28) in der Stützeinrichtung (11) der Prüfstation am Kopf der Druckgasflasche (28) ein über die Transportanlage (26) antreibbarer Drehantrieb angreift.

20. Prüfsystem nach Anspruch einem der Ansprüche 15 bis 19, **dadurch gekennzeichnet, dass** an dem Gestell (10) der Prüfstation ein in den Transportweg der Druckgasflaschen (28) reichende Steuerschalter vorgesehen ist, der die Bewegung der vorbeigehenden Druckgasflaschen (28) taktweise in der der Prüfstation zugeordneten Stellung zur Durchführung des Prüfvorganges anhält.

21. Prüfsystem nach Anspruch 20, **dadurch gekennzeichnet, dass** der Steuerschalter als Endschalter ausgebildet ist.

22. Prüfsystem nach Anspruch 20, **dadurch gekennzeichnet, dass** der Steuerschalter als Sensor ausgebildet ist.
